# EUROPEAN PATENT APPLICATION

(11) **EP 2 533 038 A1**
(43) Date of publication of application: **12.12.2012**
(21) Application number: 10845238.4
(22) Date of filing: 16.09.2010
(51) Int. Cl.: G01N 27/416, G01N 27/26

(54) **ELECTROCHEMICAL GAS DETECTION DEVICE**

(30) Priority: 04.02.2010 JP 2010022896
(71) Applicant: Figaro Engineering Inc., Minoo-shi Osaka 562-0036 (JP)
(72) Inventor: INOUE Tomohiro, Minoo-shi Osaka 562-0036 (JP); FUJIMORI Yuki, Minoo-shi Osaka 562-0036 (JP); KATO Yuki, Minoo-shi Osaka 562-0036 (JP)
(74) Representative: Zimmermann, Tankred Klaus
(86) International application number: PCT/JP2010/066023
(87) International publication number: WO 2011/096106

(57) **Abstract**

An output of a direct current power supply is divided with a pair of resistors, and applied to any of electrodes of an electrochemical gas sensor provided with a detection electrode, a counter electrode and a solid electrolyte membrane through a buffer amplifier. Impedance of the gas sensor is measured by switching with a switch the connection destination of one electrode of the electrochemical gas sensor between a current amplification circuit and an impedance measurement circuit. The impedance measurement circuit is formed of an alternating current power supply that switches a potential of a resistor on a side of one end connected to the switch and a potential on a side of the other end of the resistor, between the output potential and the ground potential of the direct current power supply. Gas concentration is determined by storing humidity dependency and temperature dependency of the electrochemical gas sensor, and correcting the output of the current amplification circuit based on measured impedance and ambient temperature.

## Description

### BACKGROUND OF THE INVFNTION

### 1. Field of the Invention

This invention relates to a gas detection device that uses an electrochemical gas sensor, and more particularly, to relative humidity-dependent correction of a gas sensor.

### 2. Description of the Related Art

The inventors of the invention developed an electrochemical gas sensor in which a detection electrode and a counter electrode are connected to a proton conducting membrane (see, for example, JP2008-58213A). In such a gas sensor, since the electrical conductivity of a proton conductor varies according to relative humidity, water vapor is supplied from a reservoir. However, the providing of a reservoir increases the size of the gas sensor.

JPH05-39509B (USP4718991) discloses correction of humidity dependency by measuring the impedance of a proton conducting gas sensor. However, the drive circuit of the gas sensor of JPH05-39509B (USP4718991) is complex. Therefore, the inventors conducted studies on a practical circuit for correcting humidity dependency of a proton conducting gas sensor, thereby leading to completion of the present invention.

Patent Document 1: JP2008-58213A
Patent Document 2: JPH05-39509B

### SUMMARY OF THE INVENTION

An object of this invention is to correct humidity dependency and temperature dependency of an electrochemical gas sensor with a simple circuit.

The electrochemical gas detection device of this invention is a gas detection device for detecting a gas by correcting an output of an electrochemical gas sensor without a reservoir, with the correction being performed in accordance with impedance of the gas sensor,
the electrochemical gas detection device comprising:
a direct current power supply;
at least one pair of resistors connected to the direct current power supply;
a buffer amplifier outputting a potential following a potential between at least the one pair of resistors;
an electrochemical gas sensor provided with a detection electrode, a counter electrode and a solid electrolyte membrane; with one of the detection electrode and the counter electrode being connected to the buffer amplifier;
a current amplification circuit for amplifying current flowing through the electrochemical gas sensor,
an impedance measurement circuit for measuring impedance of the electrochemical gas sensor,
a switch for switching the connection destination of one of the electrodes of the electrochemical gas sensor between the current amplification circuit and the impedance measurement circuit;
storage means for storing data on humidity dependency and temperature dependency of the electrochemical gas sensor;
a temperature sensor for measuring ambient temperature; and
a microcomputer for reading out data from the storage means in accordance with an output signal of the impedance measurement circuit and an output signal of the temperature sensor, and by correcting the output signal of the current amplification circuit on the basis of the data, determining gas concentration and controlling the switch, wherein
the impedance measurement circuit is formed of: an alternating current power supply for switching a potential of a resistor on a side of one end connected to the switch and a potential on a side of the other end of the resistor, between the output potential and the ground potential of the direct current power supply; and an alternating current voltage measurement circuit for measuring alternating current voltage applied to the electrochemical gas sensor.

The solid electrolyte membrane is, for example, a proton conducting membrane or hydroxide ion conducting membrane, and contacts a detection electrode with one side of a solid electrolyte membrane and contacts a counter electrode with the other side.

In this invention, the voltage of the direct current power supply is divided, for example, at 1:1 by at least a pair of resistors, and is connected to one electrode of a gas sensor through a buffer amplifier. The other electrode of the gas sensor is connected to a current amplification circuit and an impedance measurement circuit through a switch. When a gas targeted for detection reacts at the detection electrode and current flows to the gas sensor, the current is amplified by the current amplification circuit. Since a bias voltage obtained by dividing the voltage of the direct current power supply at 1:1, for example, is applied to the gas sensor, the current can be amplified regardless of whether the current is positive or negative. When measuring impedance, alternating current from an alternating current power supply is applied by switching the switch and isolating the gas sensor fro the current amplification circuit. When the output of the alternating current power supply is switched between the output potential and ground potential of the direct current power supply, alternating current can simply be applied in series between the gas sensor and a resistor. Humidity is determined from the impedance of the gas sensor, and ambient temperature is measured with a temperature sensor. When correction coefficient data is read from storage means in accordance with the measured value of impedance and the ambient temperature and the output of the current amplification circuit is corrected, gas concentration can be determined by correcting for the effects of ambient humidity and temperature. In this invention, relative humidity dependency and temperature dependency of a gas sensor can be corrected with a simple circuit without requiring a reservoir.

The configuration of the alternating current power supply is preferably simplified by configuring the alternating current power supply with an output port of a microcomputer. The alternating current power supply measurement circuit is preferably an AD converter of the microcomputer. The alternating current is preferably a rectangular wave for which the potential thereof changes between an output potential and ground potential of a direct current power supply.

### BRIEF DESCRIPTION OF THE DRAWINGS

FIG. 1 is a block diagram of a gas detection apparatus of an embodiment;
FIG. 2 is a drawing showing processing by a microcomputer;
FIG. 3 is a drawing showing an alternating current waveform for measuring impedance; and
FIG. 4 is a drawing showing the configuration of a map in an embodiment.

### DESCRIPTION OF THE PREFERRED EMBODIMENTS

The following provides a description of preferred embodiments of the present invention.

### Embodiments

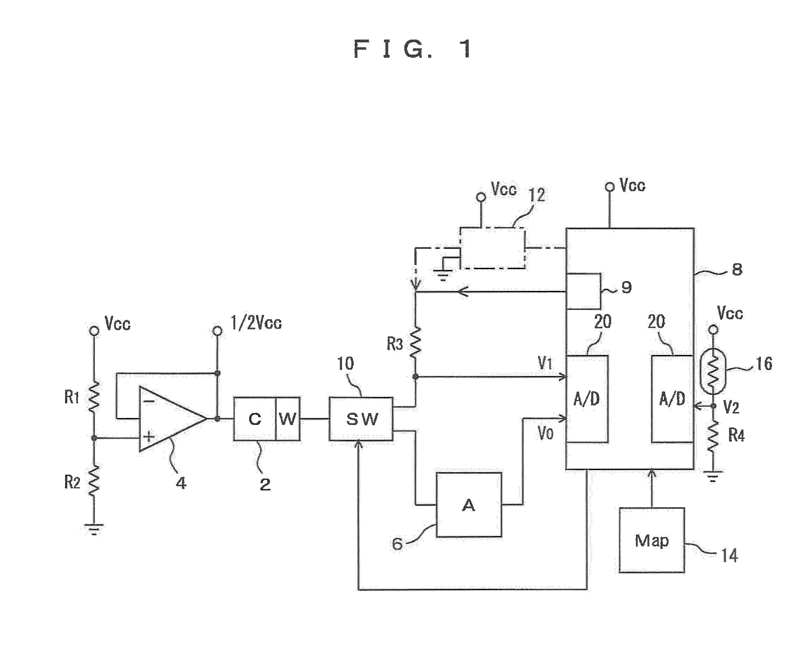

FIGS. 1 to 4 indicate an electrochemical gas detection device of an embodiment. FIG. 1 shows an example of a circuit of the detection apparatus. A direct current power supply Vcc having a voltage of 2 V, for example, is divided at 1:1, for example, with resistors R1 and R2 to generate a bias potential 1/2 Vcc of 1 V, which is then applied to an electrode C, for example, of an electrochemical gas sensor 2 through a buffer amplifier 4. Furthermore, the orientation of the gas sensor 2 may be the opposite of that shown in FIG. 1 so that the bias potential is applied to a detection electrode W. The other electrode of the gas sensor 2 in the form of the detection electrode W is connected to a switch 10. Reference symbol 6 indicates a current amplification circuit that amplifies current flowing through the gas sensor 2, and the output V0 thereof is subjected to AD conversion with an AD converter 20 of a microcomputer 8. R3 is a resistor for measuring such as 1 KΩ impedance and the resistance value can be varied in a range of 100 to 10 KΩ. Voltages of + Vcc and 0 V (ground potential) are alternately applied to a resistor R3 from, for example, an output port 9 of the microcomputer 8, enabling the microcomputer 8 to function as an alternating current power supply. The output port 9 is a switch that switches an output between, for example, +Vcc and 0 V according to a control command from a control unit not shown in the microcomputer 8. Furthermore, as indicated with the broken lines in FIG. 1, a switch such as a three-state buffer 12 may be provided instead of the output port 9, and the output potential may be switched between Vcc and ground by controlling with the microcomputer 8.

An alternating current signal applied to the connection point between the resistor R3 and the switch 10 is used as a signal V 1 representing relative humidity by subjecting to AD conversion with an AD converter of the microcomputer 8. Reference symbol 14 indicates a map composed of a storage medium such as EEPROM that stores relative humidity dependency and ambient temperature dependency data of the gas sensor 2. Reference symbol 16 indicates a temperature sensor such as a thermistor, R4 indicates a fixed resistor, and a signal V2 of the connection point between the temperature censor 16 and the resistor R4 is subject to AD conversion with the microcomputer 8 to determine ambient temperature.

The gas sensor 2 has a detection electrode and a counter electrode connected to a solid electrolyte membrane such as a proton conducting membrane, and the two electrodes are a detection electrode and a counter electrode. The proton conducting membrane is, for example, a polymer solid electrolyte membrane and although the membrane demonstrates proton conductivity, it may also be a proton conducting solid electrolyte membrane of a metal oxide. In the gas sensor 2, the electrical conductivity of the solid electrolyte membrane decreases and the gas detection current becomes smaller when relative humidity decreases. In this invention, since relative humidity dependency of the gas sensor 2 is corrected according to impedance, a reservoir is not required.

Furthermore, the midpoint potential of the resistors R1 and R2 is not limited to 50% of the direct current power supply Vcc, but rather may be varied within the range of, for example 48% to 52%. In addition, the voltage of the direct current power supply Vcc is not limited to 2 V, but rather may be a voltage of about, for example, 1 V to 3 V. The resistor R3 is not limited to a single resistor, but may also be composed of a plurality of resistors, and in the case of controlling with a control unit within the microcomputer 8 and providing the three-state buffer 12, the switch 10 is similarly controlled by the control unit of the microcomputer 8.

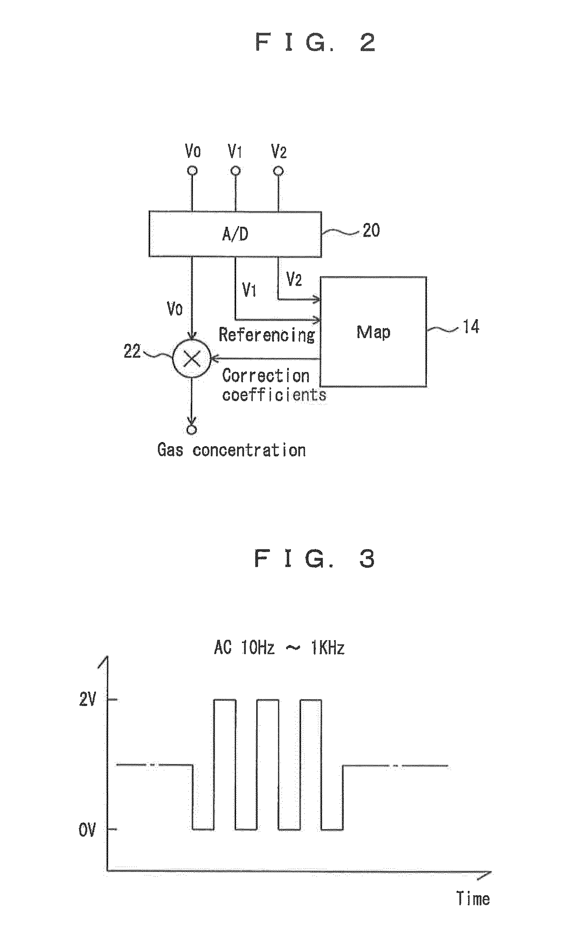

Processing to input signals V0 to V2 is shown in FIG. 2. The AD converter 20 in the microcomputer 8 carries out AD conversion on these signals, and the signal V0 is proportional to gas concentration. Since the gas sensor 2 exhibits relative humidity dependency and ambient temperature dependency, relative humidity dependency is corrected by the signal V 1 and ambient temperature dependency is corrected by the signal V2. Dependency on ambient temperature and relative humidity of the gas sensor 2 is described tin a map 14, correction coefficients are read out by referencing this data with the signals V1 and V2, the correction coefficients are stored in RAM not shown in the microcomputer 8, and the signal V0 is multiplied by the correction coefficients in a gas concentration calculation unit 22 in the microcomputer 8 to determine gas concentration. The detection accuracy of gas concentration is defined corresponding to the application, and for example, gas concentration is determined with high accuracy in measurement applications, or gas concentration is classified into a plurality of ranks for air-conditioning control applications.

In the case the switch 10 is connected to the current amplification circuit 6, the bias potential 1/2 Vcc is applied to one of the electrodes of the gas sensor 2, and the current flowing through the gas sensor 2 is amplified by the current amplification circuit 6. In this case, current can be amplified by the current amplification circuit 6 regardless of the side to which current flows within the gas sensor 2. In order to correct for humidity dependency, the microcomputer 8 is provided with a timer not shown, and the connection of the switch 10 is switched to the resistor R3 at a suitable cycle such as once every hour or once every six hours. When the connection of the switch 10 is switched to the resistor R3, the potential applied to the resistor R3 is changed over several cycles, for example, at a frequency of, for example, about 10 Hz to 1 KHz between +Vcc and ground (2 V and 0 V). Consequently, during the time the connection of the switch 10 is switched to the resistor R3, the control unit of the microcomputer 8 changes the output of the output port 9 between 0 V and +Vcc.

Since the counter electrode of the gas sensor 2 is fixed to a bias potential such as 1/2 Vcc, alternating current composed of a square wave having an amplitude Vcc is applied for several cycles in series between the gas sensor 2 and the resistor R3. An alternating current signal V1, which limits the voltage applied to the gas sensor 2 according to the resistor R3 and is applied to the connection between the resistor R3 and the switch 10, is subjected to AD conversion by the AD converter 20, and impedance of the gas sensor 2 is measured from the amplitude, peak value, rms value and so forth of the alternating current signal V1. This impedance mainly consists of resistance of the gas sensor 2, and resistance of the detection electrode and counter electrode of the solid electrolyte membrane in particular, and the contribution of the capacitance component and so forth is small. In addition, measurement accuracy is of a degree that enables impedance to be divided into a plurality of ranks. However, impedance may also be made to be measured more accurately so that humidity correction is carried out more accurately. The alternating current is applied for about, for example, 1 cycle to 10,000 cycles, and the time during which the alternating current is applied is, for example, 1 msec to 10 sec. The voltage waveform subjected to AD conversion is not limited to the potential between the resistor R3 and the switch 10, but rather may be, for example, the potential between the gas sensor 2 and the switch 10, or the voltage waveform may be a voltage waveform for which the voltage applied to the resistor R3 is divided. Namely, the amplitude +Vcc can be applied to a series circuit between the resistor R3 and the gas sensor 2, and an arbitrary alternating current voltage measurement circuit can be used that measures resistance of the gas censor 2. Furthermore, alternating current composed of a sine wave may be applied instead of a square wave, and in that case, a DA converter is used instead of the output port 9.

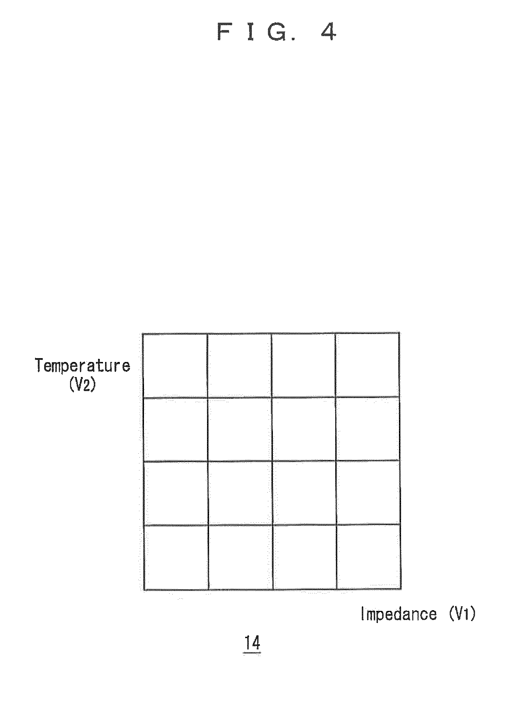

FIG. 4 indicates the configuration of the map 14, and the storing of the map 14 may be in ROM within the microcomputer 8 or memory outside the microcomputer 8. The map 14 is composed of, for example, a two-dimensional table, one dimension of the table consists of the signal V 1 representing impedance of the gas sensor 2, while the other dimension consists of the signal V2 representing ambient temperature, and correction coefficients are read from the signals V 1 and V2.

The following effects are obtained in the embodiment.
(1) A reservoir for supplying water vapor to the electrochemical gas sensor is not required.
(2) Impedance can be measured simply by adding the switch 10, the resistor R3 and so forth to a circuit for driving the gas sensor 2.
(3) Configuring the alternating current power supply with an output port of the microcomputer 8 enables the alternating current power supply to be configure particularly easily.
(4) Storing both temperature dependency and relative humidity dependency data of the gas sensor 2 in the map 14 and providing the thermistor 16 makes it possible to correct for both humidity dependency and temperature dependency.

### Description of numerals

- 2: electrochemical gas sensor
- 4: buffer amplifier
- 6: current amplification circuit
- 8: microcomputer
- 9: output port
- 10: switch
- 12: three-state buffer
- 14: map
- 16: thermistor
- 20: AD converter
- 22: gas concentration calculator
- R1 - R4: resistor

## Claims

1. An electrochemical gas detection device for detecting a gas by correcting an output of an electrochemical gas sensor without a reservoir, with the correction being performed in accordance with impedance of the gas sensor,
the electrochemical gas detection device comprising:
a direct current power supply;
at least one pair of resistors connected to the direct current power supply;
a buffer amplifier outputting a potential following a potential between at least the one pair of resistors;
an electrochemical gas sensor provided with a detection electrode, a counter electrode and a solid electrolyte membrane; with one of the detection electrode and the counter electrode being connected to the buffer amplifier;
a current amplification circuit for amplifying current flowing through the electrochemical gas sensor,
an impedance measurement circuit for measuring impedance of the electrochemical gas sensor,
a switch for switching the connection destination of one of the electrodes of the electrochemical gas sensor between the current amplification circuit and the impedance measurement circuit;
storage means for storing data on humidity dependency and temperature dependency of the electrochemical gas sensor;
a temperature sensor for measuring ambient temperature; and
a microcomputer for reading out data from the storage means in accordance with an output signal of the impedance measurement circuit and an output signal of the temperature sensor, and by correcting the output signal of the current amplification circuit on the basis of the data, determining gas concentration and controlling the switch,
the impedance measurement circuit being formed of: an alternating current power supply for switching a potential of a resistor on a side of one end connected to the switch and a potential on a side of the other end of the resistor, between the output potential and the ground potential of the direct current power supply; and an alternating current voltage measurement circuit for measuring alternating current voltage applied to the electrochemical gas sensor.

2. The electrochemical gas sensor according to claim 1, the alternating current power supply being an output port of the microcomputer.

3. The electrochemical gas sensor according to claim 2, the alternating current voltage measurement circuit being an AD converter of the microcomputer.

4. The electrochemical gas sensor according to claim 3, the output of the alternating current power supply being a rectangular wave.
